# EUROPEAN PATENT APPLICATION

(11) **EP 3 832 413 A1**
(43) Date of publication of application: **09.06.2021**
(21) Application number: 19213766.9
(22) Date of filing: 05.12.2019
(51) Int. Cl.: G05B 19/4065

(54) **SYSTEM, DEVICE AND METHOD FOR MODEL BASED ANALYTICS**

(71) Applicant: Siemens Aktiengesellschaft, 80333 München (DE)
(72) Inventor: Sharipov, Vasilii, 76185 Karlsruhe (DE); Ripplinger, Thomas, 76149 Karlsruhe (DE)

(57) **Abstract**

System, Device and Method for model based analytics is disclosed. The computing device (150, 200, 360, 350) is configured to communicate with a remote server (230, 330) and one or more assets (240, 250, 260 and 370, 375, 380, 390) in the automation environment (280, 310), the computing device (150, 200, 360) comprising a firmware module (220, 365) containing instructions that, when executed by the processor, cause the computing device (150, 200, 360) to receive model parameters associated with the assets (240, 250, 260 and 370, 375, 380, 390), wherein the model parameters include predetermined performance indices associated with the assets (240, 250, 260 and 370, 375, 380, 390); generate at least one model associated with the assets (240, 250, 260 and 370, 375, 380, 390) based on association between the model parameters and predicted operating conditions of the assets (240, 250, 260 and 370, 375, 380, 390); and determine dynamically that the model generated is suitable for analyzing operation data of the assets (240, 250, 260 and 370, 375, 380, 390), wherein the operation data comprises a measure of, preferably real-time, operating conditions of the assets (240, 250, 260 and 370, 375, 380, 390).

## Description

The present invention relates to system, device and method for model based analytics. Especially, the present invention relates to model based analytics in a distributed computing environment.

An automation environment includes multiple devices and assets. The devices may include interface devices, edge devices, Internet of Things (IoT) enabled devices, which may be light weight, low cost devices which collect data from various sensors and/or actuators deployed in the automation environment. Further, the devices may store and buffer the collected data, conduct analysis of the collected data, and perform an action (e.g., issuing a control command) based on the outcome of analysis. In some cases, the analysis is perform using artificial intelligence models. In such cases, the devices may require frequent inputs from a user or a domain expert to execute the artificial intelligence models. The systems that use such devices may benefit from improvements.

The present invention provides a model based analytics of operation data associated with the assets with minimal external input.

For example, a computing device for model based analytics in an automation environment, configured to communicate with a remote server and one or more assets in the automation environment includes a processor; memory containing instructions that, when executed by the processor, cause the computing device to receive model parameters associated with the assets, wherein the model parameters include predetermined performance indices associated with the assets; generate at least one model associated with the assets based on association between the model parameters and predicted operating conditions of the assets; and determine dynamically that the model generated is suitable for analyzing operation data of the assets, wherein the operation data comprises a measure of, preferably real-time, operating conditions of the assets.

In another example, a distributed computing system for model based analytics in an automation environment, includes the computing device and an Internet of Things (IoT) platform communicatively coupled to the computing device, wherein the IoT platform is configured to transmit the model parameters to the computing device.

In yet another example, a method for model based analytics in an automation environment includes receiving model parameters associated with assets in the automation environment, wherein the model parameters include predetermined performance indices associated with the assets; generating at least one model associated with the assets based on association between the model parameters and predicted operating conditions of the assets; and determining dynamically that the model generated is suitable for analyzing operation data of the assets, wherein the operation data comprises a measure of, preferably real-time, the operating conditions of the assets.

As used herein, assets refer to systems and devices in the automation environment. The assets may be remotely located from the IoT platform. For example, the assets can be equipments, sensors, actuators, robots, machinery in an industrial automation enviroment. The assets can also be medical devices and equipments in a healthcare automation environment. Furthermore, the assets can be home appliances or office appliances or systems in a building automation environment.

As used herein, the computing device may be an interface device, edge device or an Internet of Things (IoT) enabled device. In an embodiment, the computing device is an interface device such as interface module, I/O module, etc., in industrial automation environment. The computing device is used for connecting a plurality of field devices with the control systems in the industrial environment. The interface devices transmit process data from the field devices (such as sensors) to the control devices and transmit control data (such as target values, target commands) from the control devices to the field devices (such as actuators).

In another embodiment, the computing device is an edge device that provided between a network of the automation environment and a cloud network associated with the IoT platform. The computing device may be light weight, low cost devices which collect data from various sensors and/or actuators deployed in the automation environment. Further, the computing device may store and buffer the collected data, conduct analysis of the collected data, and perform an action (e.g., issuing a control command) based on the outcome of analysis. Furthermore, the computing device may communicate the analysis for further processing on the IoT platform.

As used herein, the IoT platform is may be a computing-based platform configured to provide a cloud service, a fog service or a combination of both. The service may be an analytics service. The computing platform may be using cloud computing or fog computing. As used herein, "cloud computing" refers to a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

As used herein "fog computing" or edge computing enables the IoT platform to be realized closer to the automation environment. Fog/edge computing extends the cloud computing to the physical location of the devices belonging to the automation network. It may be combination of multiple edge devices that are configured to execute the operation of the IoT platform. A user may access the computing device via the IoT platform to configure one or more parameters associated the model based analysis. It will be appreciated by a person skilled in the art that the user can be a human, machine, humanoid, software application executed by a network of devices, etc. In an embodiment, the user may include a virtual replica of the automation environment that generates the model parameters.

In an embodiment, the computing device includes a training module to generate training data is generated from one of historical operation data and the operation data, wherein the predicted operating conditions are generated based on the training data. The training data includes the operating data to enable updates to the training data. The training data may also be generated from synthesized data that includes artificial data synthesized from the historical operation data and/or the operation data. The training data is used to generate the predicted operating conditions.

As used herein, the predicted operating conditions refers to the output expected from the model based analysis. The predicted operating conditions may also define how the computing device will function after the model is trained. In an example, the predicted operating conditions may be patterns learnt from the historical data and/or the synthesized data. For example, a Markov model may be generated by the computing device that is used to recognize patterns in the operation data.

As used herein, the predetermined performance indices include metadata on how the model needs to be configured or generated. In the above example of a Markov model, the predetermined performance indices may indicate size of the training data to train the model. The model parameters may be used to further generate model configuration such as number of states or layers (may include hidden states) of the model. The predetermined performance indices may be generated based on how the assets need to be analyzed. As indicated in the above example, for pattern recognition analysis the predetermined performance indices may include type of data to analyze, expected accuracy of the model, acceptable tolerance. In an embodiment, the IoT platform may be configured to enable the user to input the model parameters by prompting questions. For example, the user may be asked whether the operation data is to be analyzed as a whole or only one type of data, such as temperature data. Also, the user may be prompted to indicate the purpose of the model based analysis, for example, overheating pattern analysis.

The system of the present invention may include, in certain embodiments, a Graphical User Interface (GUI) of an application hosted on a user device. The user device may be communicatively coupled to the computing device via the IoT platform. The GUI may be used to perform the above interactions with the user. For example, the model parameters are received by the IoT platform via the GUI.

In an embodiment, the computing device may include an analytics engine configured to analyze the model parameters and the training data associated with the asset and generate the model associated with the assets based on the analysis. In an embodiment, the analytics engine may convert the model parameters to model configuration to generate the model. Accordingly, the analytics engine is configured to determine the model configuration without direct input. Therefore, even if the user does not know what the model configuration should be, the model parameters or the predicted performance indices may be used to generate the model configuration.

In another embodiment, the computing device may include a metadata module to generate metadata indicating that a required quality of the model. The model is considered trained based on the metadata. The metadata comprises predetermined quality parameters associated with the model. The predetermined quality parameters are based on satisfaction of a predefined condition and/or on a predefined ratio of the training data and the operation data. The predefined condition includes at least one of a change of the operating conditions of the assets and an event and wherein the predefined ratio is a measure of permitted deviation between the training data and the operation data. In an embodiment, the metadata may be derived from the model parameters or from the questions prompted to the user that is used generate the model parameters.

For example, the computing device may be configured to detect one or more failures in the asset. The metadata may include an event that is associated with the failures. When the event is detected in the operation data, the metadata indicates that the model is training and can be used for monitoring the operation data. In this example, the model generated may be a correlation model including one or more correlation matrix. Changes in correlation between datapoints in the operation data may indicate developing failures in the asset.

In an embodiment, the analytics engine is configured to validate the model generated based on the metadata by determining a measure of deviation of the operating data with respect to the trained data; and comparing the measure of deviation with the permitted deviation indicated in the metadata. Further, the analytics engine is configured to initiate updation of the model by calibrating at least one of the model parameters and by updating the training data based on the comparison. Accordingly, the computing device is enabled to automatically determine when the model needs updation or re-training. Therefore, the model is kept up to date with real-time operating conditions of the assets.

The model may be used to perform multiple types of analysis. For example, the model may be used to find dependencies in the operation data, without upload all the datapoints to a cloud-based database. In another example, the model may be used to determine the datapoints that reflect a change in operating conditions and update the cloud-based database accordingly. Therefore, the model may be used to reduce the number of datapoint uploaded to the cloud and therefore reducing burden on the network between the cloud-computing platform and the automation environment.

The model may also be used for condition monitoring applications such as detect deviations in the operation data. In an embodiment, the computing device may include a condition monitoring module configured to predict a probable operation spectrum using the model; compare the operation data with the operation spectrum, preferably in real-time; determine a health condition of the assets based on the comparison, wherein the health condition of the assets comprises the operating conditions that indicate the health of the assets; and generate control signals to manage the health condition of the assets based on an expected health condition. As used herein, health condition may indicate remaining life of the assets, possibility of a failure in the assets, abnormal health conditions, etc.

Therefore, the computing device is enabled to take monitor assets and take appropriate actions without regular intervention of an expert. Also, as the operation data does not leave the automation environment, privacy is maintained with low latency and low bandwidth consumption.

According to an embodiment of the present invention the method and the below steps may be performed by the computing device, the IoT platform or a combination of both.

In an embodiment, training data from one of historical operation data and the operation data is generated, to determine the predicted operating conditions that may be output from the model. the training data may be stored on a cloud-based server and accessed based on the model parameters. The method may further include analyzing the model parameters and the training data associated with the asset, wherein the model is generated based on the analysis.

In an embodiment, the method may include generating metadata indicating that a required quality of the model, wherein the model is considered trained based on the metadata. The metadata comprises predetermined quality parameters associated with the model. The predetermined quality parameters are based on satisfaction of a predefined condition and/or on a predefined ratio of the training data and the operation data. The predefined condition includes at least one of a change of the operating conditions of the assets and an event and wherein the predefined ratio is a measure of permitted deviation between the training data and the operation data. The method advantageously overcomes the need for an expert to regularly confirm whether the model is trained or not. Therefore, the present invention seamlessly transitions between training and analysis stages.

In another embodiment, the method may include validating the model generated based on the metadata by determining a measure of deviation of the operating data with respect to the trained data and comparing the measure of deviation with the permitted deviation indicated in the metadata; and initiating updation of the model by calibrating at least one of the model parameters and by updating the training data based on the comparison. The model quality may be used to take decisions on the operating conditions of the assets. Therefore, the present invention is used to advantageously ensure that the model is updated at all times.

In an embodiment, the method may include predicting a probable operation spectrum based on the model; comparing the operation data with the operation spectrum, preferably in real-time; determining a health condition of the assets based on the comparison, wherein the health condition of the assets comprises the operating conditions that indicate the health of the assets; and generating control signals to manage the health condition of the assets based on an expected health condition. Advantageously, the model is used to generate control signals to avoid deterioration of the operating conditions of the assets without any latency.

The present invention also discloses a computer-program product having machine-readable instructions stored therein, which when executed by one or more processing units, cause the processing units to perform a method described herein above.

The present invention advantageously allows for a faster reaction on status changes since the analysis is done within the automation environment. The invention saves efforts for configuration and development since the transition between the training and analysis takes place automatically. Additionally, a continuous training of the model is ensured.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
Fig. 1 illustrates an architecture for model based analytics in a distributed computing environment, according to an embodiment of the present invention;
Fig. 2 illustrates a computing device for model based analytics, according to an embodiment of the present invention;
Fig. 3 illustrates a system for model based analytics, according to an embodiment of the present invention; and
Fig. 4 illustrates a flow diagram of an example methodology of model based analytics, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

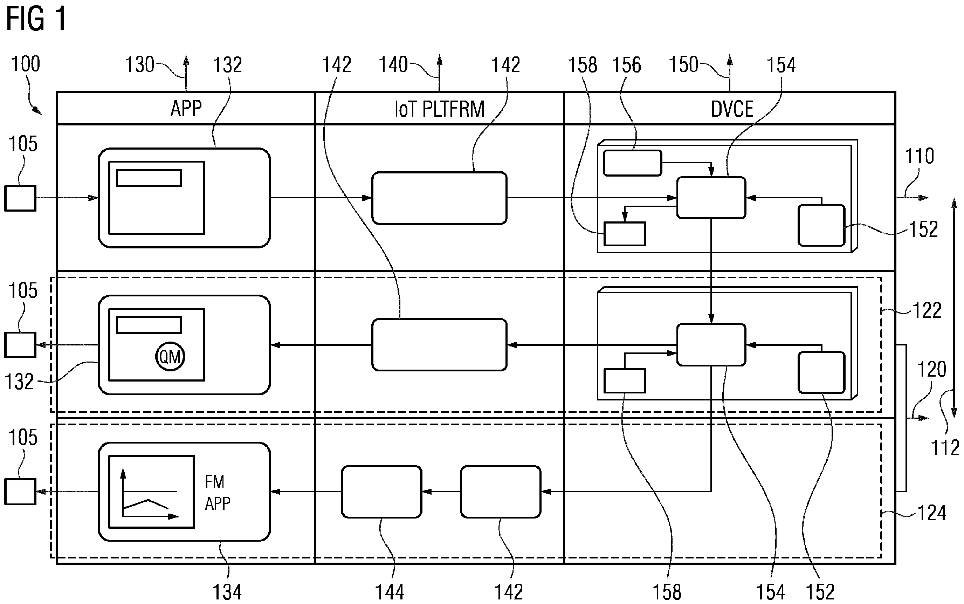

Fig. 1 illustrates an architecture 100 for model based analytics in a distributed computing environment, according to an embodiment of the present invention.

The architecture 100 depicts interaction between a user 105, an application 130 accessible via a web browser, an IoT platform 140, and a computing device 150 in an automation environment. The user 105 is not limited to a human user and may include a machine, a humanoid or a software application such as a Digital Twin. The user 105 is capable of configuring the application 130, which is in turn configured to control operation of the computing device 150 via the IoT platform 140.

The IoT platform 140 may be a cloud computing-based platform configured to provide a cloud service, such as analytics service. As used herein, "cloud computing" refers to a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

The computing device 150 may be configured to control and manage operating conditions of assets in the automation environment. The operating conditions of the assets are measured and referred to as operating data when measured in real-time. The operating conditions are referred as historical operation data in case of past measurements. The operation data includes values of signals generated from sensing and monitoring devices associated with the assets and correspond to operation of the assets. Non-limiting examples of the signal values may include vibration frequency, vibration amplitude, magnetic field strength, magnetic flux density, noise amplitude, noise frequency, current, voltage, temperature and so on. Other examples include air quality, moisture content and ambient temperature.

The user 105 is capable of accessing the application 130 via a Graphical User Interface (GUI). The application 130 may include the GUI, which serves as an editor for the user 105 to input of model parameters. The model parameters may refer to predetermined performance indices. For example, the predetermined performance indices may be with regard to vibration. The application also includes an analytics manager 132. The analytics manager 132 is configured to receive the model parameters and determine model configurations for the model based analytics. For example, the model configurations include the signals associated with the model parameters and probable data size required as for training.

The analytics manager 132 transmits the model configuration to the IoT platform 140. The IoT platform 140 includes an analytics service 142. The analytics service 142 is used to deploy the model configurations on the computing device 150. In an embodiment, the IoT platform 140 may include a database with one or more libraries of model instances associated with the model configurations. At least one model instance may also be deployed on the computing device 150.

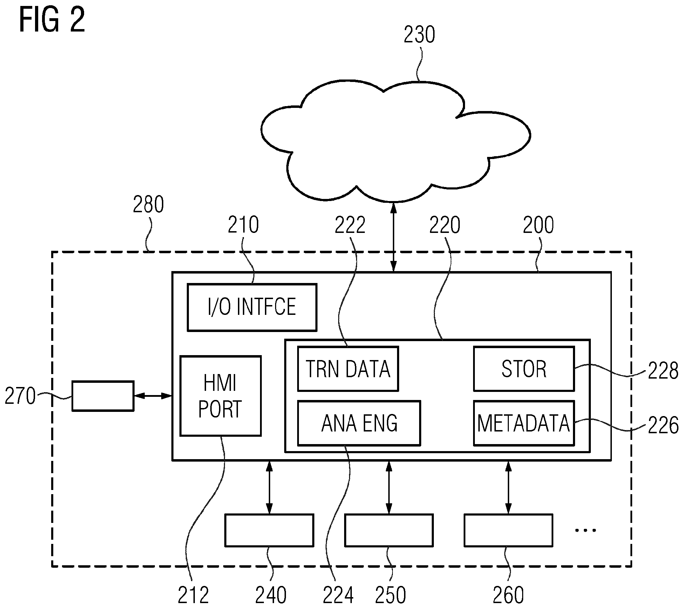

The computing device 150 includes a firmware that comprises modules such as a training module 152, an analytics engine 154, a metadata module 156 and a store module 158. The operation of the modules 152-158 is described in detail in FIG 2. The model configurations are deployed on the analytics engine 154. In an embodiment, the model instance is also deployed on the analytics engine 154. Further, the analytics engine 154 generates a model based on the model configurations and training data from the training model. In an embodiment, the model instance is updated based on the model configurations, the training data. The model is stored using the store module 158.

The computing device 150 may be for multiple analysis. For example, the computing device may be used to find data dependencies without uploading all datapoints in the operating data to the IoT platform 140. The computing device 150 may be used to detect failures in the assets. The model configurations are used to configure the model to perform one or more of the above analysis. Accordingly, the generated model may include a correlation model, an anomaly detection model, a pattern detection model, etc.

After the model is generated, the computing device 150 is configured to determine dynamically when the training or updation of the model is complete. The analytics engine 154 receives a command to stop training based on metadata from the metadata module 156. The metadata is an indicium of the required quality of the model. For example, the metadata includes predetermined quality parameters associated with the model. The predetermined quality parameters may include satisfaction of a predefined condition and/or on a predefined ratio of the training data and the operation data. For example, the predefined condition includes a change of the operating conditions of the assets or an event. The predefined ratio may be a measure of permitted deviation between the training data and the operation data.

The operations performed by the application 130, the IoT platform 140 and the computing device 150 till the end of training is referred as model generation stage 110. The present invention advantageously transitions to model-based analysis stage 120 without intermediate intervention. Accordingly, the present invention advantageously overcomes addition of additional scoring stage 112.

The model-based analysis stage 120 includes steps 122 and 124 that may happen in parallel or in sequence. At step 122, status of the model and the model quality are indicated to the user 105 using the analytics service 142 and the analytics manager 132. In an embodiment, one or more fields in the GUI of the application 130 may be modified to indicate that the model is trained and has transitioned to analysis stage 120.

At step 124, the analytics engine 154 is configured to perform the desired analytics based on the model. The analytics is performed on the operation data received from the assets in real-time. The analytics engine 154 may be configured to transmit performance indices to the analytics service 142. For example, the analytics engine 154 is configured to transmit performance indices that that define changes in the operating conditions of the assets. In another example, the performance indices may include changes in correlation between the training data and the model configurations. Other examples of performance indices are anomalies in the operation data that may indicate developing failures. The performance indices may be stored in the database 144. Further, the performance indices are indicated to the user 105 via a condition monitoring module 134 of the application 130. For example, a visual representation indicating expected performance of the assets versus performance in real-time is illustrated.

Fig. 2 illustrates a computing device 200 for model based analytics, according to an embodiment of the present invention. The computing device 200 is in an automation environment 280 comprising assets 240, 250 and 260. The computing device 200 is configured to manage and control operation of the assets 240, 250 and 260. The automation environment may include a complex industrial set-up with a plurality of assets such as a power plant, wind farm, power grid, manufacturing facility, building set-up, process plants and so on.

The computing device 200 includes an Input/Output (I/O) interface 210 and a firmware module 220. The computing device 200 is configured to communicate with an IoT platform 230 via the I/O interface 210. In an embodiment, the computing device 200 is configured to handle a steady stream of operation data of the assets 240, 250 and 260 that it transfers to the IoT platform 230. This inflow and outflow of data allows for constant monitoring of the automation environment while allowing near real-time insight into the assets 240, 250 and 260 being monitored.

The computing device 200 may further include a Human Machine Interface (HMI) port or a display port 212. The Integrated display port 212 may enable direct connection to a high-definition monitor 270 in the automation environment 280.

The computing device 200 is configured to perform model-based analytics based on the modules 222, 224, 226 and 228 executed on the firmware 220. The operation and interaction of each of the module 222, 224, 226 and 228 are described herein-below.

The training module 222 is configured to generate training data, associated with the assets 240, 250, 260, from historical operation data and/or the operation data. The training data includes the operating data to enable updates to the training data. The training data may also be generated from synthesized data that includes artificial data synthesized from the historical operation data and/or the operation data. The training data is used to generate predicted operating conditions.

The analytics engine 224 is configured to analyze model parameters from a user and the training data and to generate a model associated with the assets 240, 250, 260, based on the analysis. The analyzing the model parameters may include converting the model parameters to relevant model configuration for the generation of the model. As an output the model provides the predetermined condition modified based on the model parameters.

The model generated by the analytics engine 224 may be used for reduced dimensionality of the operation data from the assets 240, 250 and 260. For example, the dimensionality may be reduced by finding linear dependencies between datapoints in the operation data. A correlation model is calculated and the datapoints with maximal variance are extracted. As an output of the model provides the vector of variances, correlation matrix and transformed datapoints. Accordingly, the output of the model is dependent on the model parameters and the training data. In the above example, the model parameters may be a measure of variance in the datapoints. The training data may include the historical operation data with predetermined dependencies.

The metadata module 226 is configured to generate metadata indicating that a required quality of the model. The metadata module 226 may output a stop command to the analytics engine 224 to indicate the training is complete. The model is considered trained based on the metadata. The metadata includes predetermined quality parameters associated with the model. For example, the predetermined quality parameters are based on satisfaction of a predefined condition and/or on a predefined ratio of the training data and the operation data. The predefined condition may include change of the operating conditions of the assets 240, 250 and 260 or an event. The predefined ratio may be a measure of permitted deviation between the training data and the operation data.

In an embodiment, the metadata is output to the analytics engine 224. The analytics engine 224 is configured to validate the model generated based on the metadata by determining a measure of deviation of the operating data with respect to the trained data. The measure of deviation is compared with the permitted deviation indicated in the metadata to validate the model. When the model is not validated, i.e. when unknown operation data is greater than the trained data, the model is updated. Updation includes modifying the training data to include new data patterns identified in the operation data. In an embodiment, the permitted deviation may be set manually or determined automatically using neural network algorithms.

For example, the model is an autoencoder model that is configured for anomaly detection. The model is trained exclusively with damage-free operation data that may be synthesized artificially. This is intended to detect anomalies caused by a malfunction of the assets 240, 250, and 250, for example by fatigue. In order to complete training of the model, the training time series acts as the metadata. The training time series may be smaller time series.

The trained model is stored in using a store module 228. The store module 228 may be configured to store the model with a unique identifier. The unique identifier may indicate properties of the model, such as potential uses of the model, time of generation and/or version.

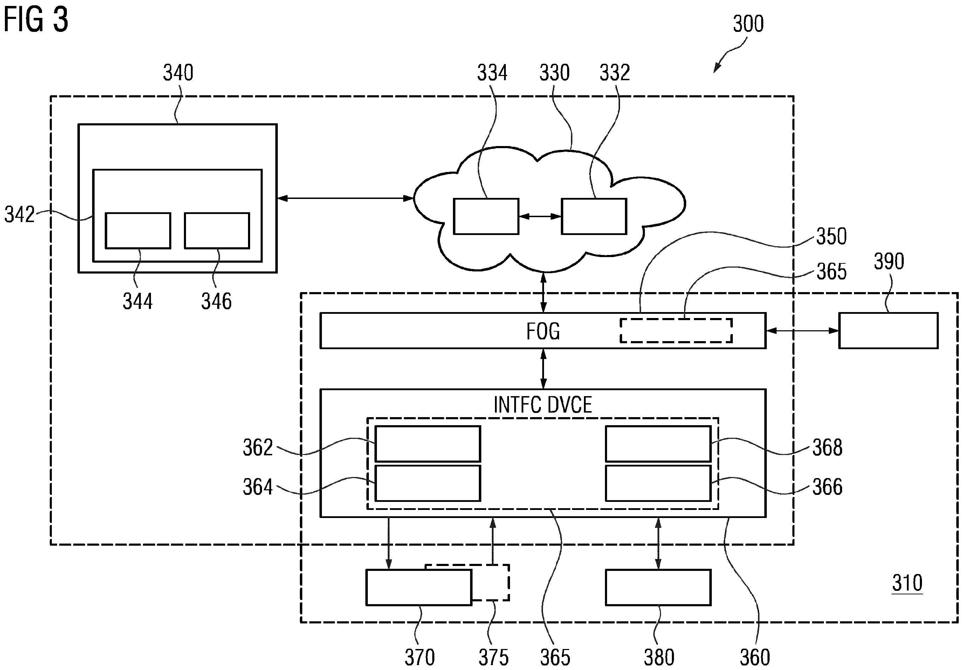

Fig. 3 illustrates a system 300 for model based analytics for assets 370, 375, 380 and 390 in an automation environment 310, according to an embodiment of the present invention. In FIG 3 the automation environment is an industrial facility where one or more industrial processes such as manufacturing, refining, smelting, assembly of equipment, etc., may take place using assets 370, 375, 380 and 390.

The system 300 includes an IoT platform 330 communicatively coupled to an interface device 360 via a Fog computing system 350. The system 300 includes the interface device 360 and the Fog computing system 350. Further, the system 300 may include a user device 340 that can be used to configure the interface device 360 or the Fog computing system 350 via the IoT platform 330.

The system 300 interacts with assets 370, 375, 380 and 390. The assets 370, 375, 380 and 390 may be located in same or different locations and are connected to the Fog computing system 350 directly in case of asset 390 or indirectly in case of assets 370, 375, and 380. The assets 380 and 390 include communication interfaces embedded in them to communicate operation data to the interface device 360 or the Fog computing system 350. The asset 370 may be configured only to receive control commands/inputs from the interface device 360. For example, the asset 370 may be an actuator device that is configured to receive commands from the interface device 360. Accordingly, the asset 370 may be provided with a sensor asset 375 that is configured to sense operating conditions of the asset 370 and transmit the operation data to the interface device 360.

The user device 340 is an apparatus/device that may include a display means that enables interaction with a Graphical User Interface (GUI) 342 to a web interface for the IoT platform 330, a web based downloadable application interface 344 and an analytics service interface 346. In an embodiment, the application interface 344 is for a condition monitoring application to monitor the operating conditions of the assets 370, 375, 380 and 390. Accordingly, the application interface 344 is an interface for industrial applications that may be deployed in the automation environment. The application interface 344 and/or the analytics service interface 346 is configured to receive model parameters from a user of the device 340. In an embodiment, the model parameters may be generated by the industrial applications using virtual replicas of the assets 370, 375, 380 and 390. In such an embodiment, the model parameters are transmitted to the IoT platform 330.

The IoT platform 330 is an end-to-end software framework that is communicatively coupled to the user device 340 and the assets 370, 375, 380 and 390 via the Fog computing system 350 and/or the interface device 360. The IoT platform 330 may be provided on a cloud computing system on a cloud network. The cloud computing system is a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical re-sources. The network is, for example, a wired network, a wireless network, a communication network, or a network formed from any combination of these networks.

The IoT platform 330 includes an analytics service 332 and a database 334. The analytics service 332 receives the model parameters and generates model configurations. For example, model configurations indicate what operation data is to be analyzed, what type of model, data size required for the model, etc. For example, the model configurations may indicate that a ball bearing monitoring application is to be generated using an artificial neural network in which vibration data is monitored.

The Fog computing system 350 is a network of devices that are within the automation environment 310. The Fog computing system 350 may be a combination of edge devices that controls data flow at the boundary between an automation environment and the cloud network. In an embodiment, the Fog computing system 350 is configured to modify operation of the assets 370, 375 and, 380 directly. Especially in case of failure of the interface device 360, the Fog computing system 350 is configured to perform operations of the interface device 360.

The interface device 360 include interface modules, I/O modules, etc., are used in the automation environment 310 for connecting the assets 370, 375, 380 with control devices in the Fog computing system 350. In an embodiment, the interface devices transmit the operation data from the asset 375 (such as sensor) to the control devices and transmit control data (such as target values, target commands) from the control devices to the asset 370 (such as actuator).

In accordance with the current disclosure, one or more industrial applications 365 are deployed on the interface device 360 and/or Fog computing system 350. The industrial applications analyze signals from the assets 370, 375, 380 and 390 connected to the interface devices. The industrial applications include one or more machine learning models which are used in the analysis of the operation data. The output from the industrial applications are then transmitted to the control devices. Parameters of the industrial applications 365 can be set/modified using the application interface 344.

In an embodiment, the industrial application 365 is deployed using multiple modules such as training module 362, analytics engine 364, metadata module 366 and store module 368. The operation of the modules 362, 364, 366, and 368 are comparable to the modules 222, 224, 226 and 228, respectively. The models may be generated by the analytics engine 364 based on model parameters provided via the GUI 342 and training data generated by the training module 362. The metadata module 366 generates metadata that indicates completion of model generation and training. Based on the metadata, the model dynamically transitions into analysis of the operation data from the assets 370, 375, 380 and 390.

After the model is generated, it may be continually validated using the metadata. In an embodiment, the analytics engine 364 is configured to determine the amount of unknown values in the operation data. If the amount of unknown values is not within a permitted deviation indicated in the metadata, the model is no longer validated and is then updated.

During operation of the model, the interface device 360 and/or Fog computing system 350 are configured to predict a probable operation spectrum of the assets 370, 375, 380 and 390 based on the model. Further, the operation data is compared with the operation spectrum in real-time. Furthermore, a health condition of the assets 370, 375, 380 and 390 is determined based on the comparison. The health condition of the assets comprises the operating conditions that indicate the health of the assets. Based on the health condition, control commands may be generated by the control devices to manage the health condition of the assets 370, 375, 380 and 390.

In an example embodiment, the industrial application 365 is configured to detect failure frequencies from vibration data (i.e. operation data) of the assets 370, 375, 380 and 390. The analytics engine 364 is configured to transform vibration data in terms of amplitudes. Further, the analytics engine 364 is configured to generate a spectrogram based on frequency range indicated in the model parameters. Once the model is generated, the industrial application 365 is configured to analyze the combination of amplitudes that causes the most variance in the spectrogram. A peak in the spectra generated for real-time operation data may indicate a developing failure at its frequency.

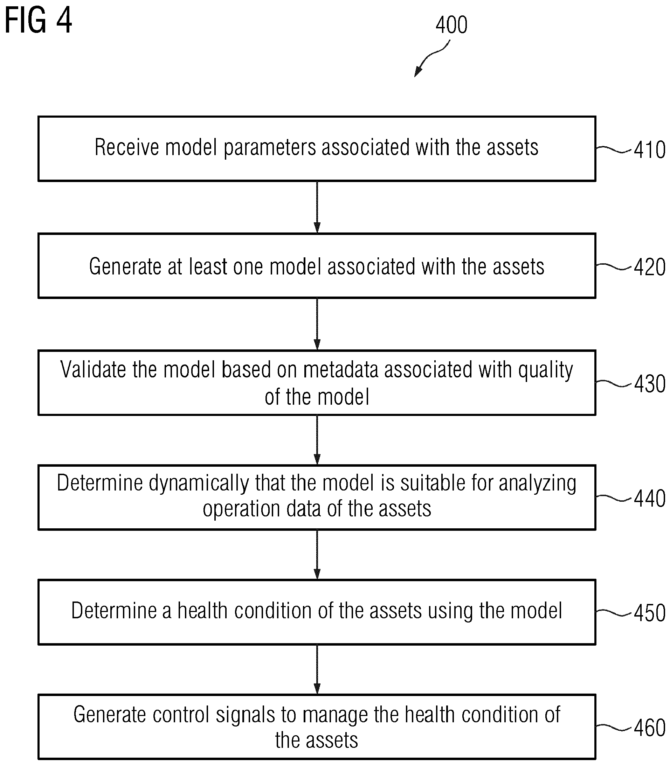

Fig. 4 illustrates a flow diagram 400 of an example methodology of model based analytics, according to an embodiment of the present invention. The method begins at step 410 with receiving model parameters associated with assets in an automation environment. The model parameters include predetermined performance indices associated with the assets. The model parameters may be transmitted to an IoT platform to enable model generation at a computing device in the automation environment.

At step 420, a model associated with operation of the assets is generated based on the model parameters and training data. Step 420 also includes analysing the model parameters and training data to generate the model. The training data may be used to predict an output of the model, that is predicted operating conditions for the assets. In an embodiment, the training data is generated at step 420. The training data is generated from historical operation data of the assets and synthesized data associated with the assets.

At step 430, the model is validated based on metadata associated with quality of the model. At the step 430 the metadata is generated. The metadata comprises predetermined quality parameters based on satisfaction of a predefined condition and/or on a predefined ratio of the training data and the operation data. The predefined condition includes change of the operating conditions of the assets. The predefined ratio is a measure of permitted deviation between the training data and the operation data. The validation of the model may be performed by data mining a measure of deviation of the operating data with respect to the training data. If the operating data has unknown values beyond a permitted amount the model is automatically updated at step 430.

At step 440, the model dynamically transitions into and analysing mode. In the analysing mode, the model is configured to analyse the operating data from the assets. The type of analysis depends on the model that is generated. In an example method, the generated model is used to determine health condition of the assets at step 450. The health condition may indicate remaining life of the assets, possibility of a failure in the assets, abnormal health conditions, etc.

At step 460, control signals are generated to manage the health condition of the assets. In an embodiment, an expected health condition is generated based on virtual replicas of the assets. A comparison of the expected health condition and the determined health condition is used to generate the control signals.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art. Additionally, while the current disclosure describes the configuration tool 110 as an independent component, the configuration tool may be a software component and may be realized within a distributed control system or an engineering software suite. Additionally, in an embodiment, one or more parts of the configuration tool 110 may be realized within the controller 140.

While the present disclosure has been described in detail with reference to certain embodiments, it should be appreciated that the present disclosure is not limited to those embodiments. While, the present disclosure has been explained using a polynomial model and neural networks, these are examples and the current invention disclosure may be applied to other forms of machine learning based signal analytics. Similarly, while the current disclosure mentions machine learning applications with single machine learning model, machine learning applications utilizing one or more models in ensemble may also be realized in the scope of the current invention. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to system/device claims.

## Claims

1. A computing device (150, 200, 360, 350) for model based analytics in an automation environment (280, 310), configured to communicate with a remote server (230, 330) and one or more assets (240, 250, 260 and 370, 375, 380, 390) in the automation environment (280, 310), the computing device (150, 200, 360) comprising:
a firmware module (220, 365) containing instructions that, when executed by the processor, cause the computing device (150, 200, 360) to:
receive model parameters associated with the assets (240, 250, 260 and 370, 375, 380, 390), wherein the model parameters include predetermined performance indices associated with the assets (240, 250, 260 and 370, 375, 380, 390);
generate at least one model associated with the assets (240, 250, 260 and 370, 375, 380, 390) based on association between the model parameters and predicted operating conditions of the assets (240, 250, 260 and 370, 375, 380, 390); and
determine dynamically that the model generated is suitable for analyzing operation data of the assets (240, 250, 260 and 370, 375, 380, 390), wherein the operation data comprises a measure of, preferably real-time, operating conditions of the assets (240, 250, 260 and 370, 375, 380, 390).

2. The computing device (150, 200, 360) according to the preceding claim, wherein the memory comprises:
a training module (152, 222, 362) to generate training data is generated from one of historical operation data and the operation data, wherein the predicted operating conditions are generated based on the training data.

3. The computing device (150, 200, 360) according to one of the preceding claims, wherein the memory comprises:
an analytics engine (154, 224, 364) configured to analyze the model parameters and the training data associated with the asset and generate the model associated with the assets (240, 250, 260 and 370, 375, 380, 390) based on the analysis.

4. The computing device (150, 200, 360) according to one of the preceding claims, further comprising:
a metadata module (156, 226, 366) to generate metadata indicating that a required quality of the model, wherein the model is considered trained based on the metadata wherein the metadata comprises predetermined quality parameters associated with the model, wherein the predetermined quality parameters are based on satisfaction of a predefined condition and/or on a predefined ratio of the training data and the operation data, wherein the predefined condition includes at least one of a change of the operating conditions of the assets (240, 250, 260 and 370, 375, 380, 390) and an event and wherein the predefined ratio is a measure of permitted deviation between the training data and the operation data.

5. The computing device (150, 200, 360) according to any of the preceding claims, wherein the analytics engine (154, 224, 364) is configured to:
validate the model generated based on the metadata by:
determining a measure of deviation of the operating data with respect to the trained data; and
comparing the measure of deviation with the permitted deviation indicated in the metadata.

6. The computing device (150, 200, 360) according to any of the preceding claims, wherein the analytics engine (154, 224, 364) is further configured to initiate updation of the model by calibrating at least one of the model parameters and by updating the training data based on the comparison.

7. The computing device (150, 200, 360) according to any of the preceding claims, wherein the memory comprising:
a condition monitoring module (134) configured to:
predict a probable operation spectrum using the model;
compare the operation data with the operation spectrum, preferably in real-time;
determine a health condition of the assets (240, 250, 260 and 370, 375, 380, 390) based on the comparison, wherein the health condition of the assets (240, 250, 260 and 370, 375, 380, 390) comprises the operating conditions that indicate the health of the assets (240, 250, 260 and 370, 375, 380, 390); and
generate control signals to manage the health condition of the assets (240, 250, 260 and 370, 375, 380, 390) based on an expected health condition.

8. A distributed computing system (300) for model based analytics in an automation environment (280, 310), the distributed computing system comprising:
an Internet of Things (IoT) platform communicatively coupled to the computing device (150, 200, 360) according to claims 1-7, wherein the IoT platform is configured to transmit the model parameters to the computing device (150, 200, 360); and
the computing device (150, 200, 360) configured according to claims 1-7.

9. The distributed computing system (300) according to claim 8, further comprising:
a Graphical User Interface (GUI) (334) of a condition monitoring application hosted on a user device communicatively coupled to the computing device (150, 200, 360) via the IoT platform, wherein the model parameters are received by the IoT platform via the GUI.

10. A method for model based analytics in an automation environment (280, 310), the method comprising:
receiving model parameters associated with assets (240, 250, 260 and 370, 375, 380, 390) in the automation environment (280, 310), wherein the model parameters include predetermined performance indices associated with the assets (240, 250, 260 and 370, 375, 380, 390);
generating at least one model associated with the assets (240, 250, 260 and 370, 375, 380, 390) based on association between the model parameters and predicted operating conditions of the assets (240, 250, 260 and 370, 375, 380, 390); and
determining dynamically that the model generated is suitable for analyzing operation data of the assets (240, 250, 260 and 370, 375, 380, 390), wherein the operation data comprises a measure of, preferably real-time, the operating conditions of the assets (240, 250, 260 and 370, 375, 380, 390) .

11. The method according to claim 10, further comprising:
generating training data from one of historical operation data and the operation data, to determine the predicted operating conditions; and
analyzing the model parameters and the training data associated with the asset, wherein the model is generated based on the analysis.

12. The method according to one of claims 10 and 11, further comprising:
generating metadata indicating that a required quality of the model, wherein the model is considered trained based on the metadata, wherein the metadata comprises predetermined quality parameters associated with the model, wherein the predetermined quality parameters are based on satisfaction of a predefined condition and/or on a predefined ratio of the training data and the operation data, wherein the predefined condition includes at least one of a change of the operating conditions of the assets (240, 250, 260 and 370, 375, 380, 390) and an event and wherein the predefined ratio is a measure of permitted deviation between the training data and the operation data.

13. The method according to one of claims 10 to 12, further comprising:
validating the model generated based on the metadata by determining a measure of deviation of the operating data with respect to the trained data and comparing the measure of deviation with the permitted deviation indicated in the metadata; and
initiating updation of the model by calibrating at least one of the model parameters and by updating the training data based on the comparison.

14. The method according to one of claims 10 to 13, further comprising:
predicting a probable operation spectrum based on the model;
comparing the operation data with the operation spectrum, preferably in real-time;
determining a health condition of the assets (240, 250, 260 and 370, 375, 380, 390) based on the comparison, wherein the health condition of the assets (240, 250, 260 and 370, 375, 380, 390) comprises the operating conditions that indicate the health of the assets (240, 250, 260 and 370, 375, 380, 390); and
generating control signals to manage the health condition of the assets (240, 250, 260 and 370, 375, 380, 390) based on an expected health condition.

15. A computer-program product having machine-readable instructions stored therein, which when executed by one or more processing units, cause the processing units to perform a method according to claims 10 to 14.
